# FASCICULE DE BREVET EUROPEEN

(11) **EP 1 967 269 B1**
(45) Date de publication et mention de la délivrance du brevet: **12.10.2011**
(21) Numéro de dépôt: 08300046.3
(22) Date de dépôt: 22.01.2008
(51) Int. Cl.: B01L 7/00, B01L 9/00, G01N 25/08, G01N 25/10, G01N 25/14, G01N 33/28

(54) **Dispositif de positionnement automatique assisté d'une enceinte de chauffage contre un ballon de distillation**
Automatische Positioniervorrichtung mit einer Heizkammer gegenüber einem Destillierkolben
Device for assisted automatic positioning of a heating chamber against a distillation flask

(30) Priorité: 13.02.2007 FR 0753231
(43) Date de publication de la demande: 10.09.2008
(73) Titulaire: Instrumentation Scientifique de Laboratoire ISL, 14790 Verson (FR)
(72) Inventeur: Marie, Patrick, 14980, Rots (FR)
(74) Mandataire: Livet, Marie-José

(56) Documents cités:
- EP-A1- 1 088 590
- DE-A1- 4 231 458
- FR-A1- 2 855 771
- US-A- 2 546 770
- US-A- 4 759 523

## Description

La présente invention a pour objet un dispositif de positionnement automatique assisté d'une enceinte de chauffage contre un ballon de distillation dans un appareil de distillation automatique sous pression atmosphérique d'échantillons liquides, en particulier d'échantillons de produits pétroliers.

Un tel appareil de distillation permet d'effectuer la mesure des paramètres de distillation de ces échantillons en respectant une norme d'essai prédéfinie choisie parmi plusieurs normes d'essai possibles.

Il est connu que les caractéristiques de distillation des produits pétroliers sont représentatives des performances de ces produits ainsi que des risques qu'ils peuvent faire encourir à leurs utilisateurs.

La détermination de ces caractéristiques présente notamment une grande importance dans le cas de carburants destinés à l'industrie automobile ou à l'aviation où les problèmes liés à la sécurité sont primordiaux.

Ces caractéristiques sont en particulier des tables ou des courbes représentant le pourcentage d'un échantillon évaporé selon la température, pendant une distillation, ou encore le volume du résidu et les pertes.

Les spécialistes peuvent déduire de ces caractéristiques quel sera le comportement d'un produit pétrolier donné dans une situation donnée et donc déterminer si ce produit peut ou non être utilisé en toute sécurité, ce de manière à obtenir les performances recherchées.

Dans ce contexte, les spécialistes ont édicté différentes normes d'essai qui définissent très précisément les conditions dans lesquelles doivent être obtenues de telles caractéristiques de distillation.

Par suite, pour donner des résultats exploitables, les distillations doivent être mises en oeuvre en respectant scrupuleusement ces normes.

Il existe actuellement sur le marché différents appareils de distillation automatique permettant d'effectuer la mesure des paramètres de distillation d'un échantillon liquide en respectant une norme d'essai prédéfinie.

Les appareils de distillation normalisés actuellement proposés sur le marché comportent en règle générale :
- un bâti fixe,
- une enceinte de chauffage renfermant un élément calorifique, notamment une résistance chauffante,
- une série de ballons de distillation correspondant respectivement à au moins une norme d'essai et susceptibles d'être fixés au bâti de l'appareil dans une position prédéterminée, la colonne de ces ballons pouvant être fermée par un bouchon d'obturation étanche muni d'un thermomètre permettant de mesurer la température des vapeurs évaporées et comportant une branche latérale destinée à être branchée sur un tube condenseur relié à un cylindre collecteur permettant de recueillir le condensat,
- une série de plaques isolantes destinées à être montées au-dessus de l'élément calorifique pour fermer l'enceinte de chauffage à sa partie supérieure, et équipées, chacune, d'une ouverture centrale ayant une géométrie adaptée à celle du fond des ballons de distillation associé, et
- des moyens de commande et de régulation permettant de commander et de faire varier dans le temps une grandeur de fonctionnement de l'élément calorifique, notamment la température ou la puissance de cet élément de manière à obtenir des paramètres de distillation conformement à une norme d'essai prédéfinie.

Pour effectuer la distillation d'un échantillon liquide en utilisant un tel appareil, l'utilisateur doit tout d'abord effectuer le choix d'une norme d'essai puis introduire une quantité prédéterminée d'échantillon à analyser dans un ballon de distillation correspondant à cette norme.

Il doit ensuite mettre en place le ballon de distillation ainsi rempli de l'échantillon dans l'appareil de distillation, notamment en le fixant au bâti de cet appareil dans une position prédéterminée et en le positionnant sur la plaque isolante fermant l'enceinte de chauffage.

Pour garantir que la distillation soit effectuée en respectant scrupuleusement la norme d'essai prédéfinie préalablement choisie, il est nécessaire que l'élément calorifique soit situé à une distance prédéfinie reproductible du ballon de distillation et en outre que la plaque isolante soit en appui contre ce ballon.

En effet, tout mauvais positionnement de l'élément calorifique et de la plaque isolante par rapport au ballon entraîne une dénaturation des caractéristiques de distillation obtenues.

Or, dans les appareils de distillation actuellement proposés sur le marché, le ballon de distillation est posé de manière empirique sur la plaque isolante fermant l'enceinte de chauffage, et il n'a jamais été proposé de moyens de nature à permettre de remédier à l'inconvénient susmentionné en garantissant un positionnement précis de ce ballon.

La présente invention a pour objet de combler cette lacune en proposant un dispositif de positionnement automatique assisté de l'enceinte de chauffage d'un appareil de distillation automatique normalisé du type susmentionné contre un ballon de distillation préalablement fixé sur le bâti de cet appareil.

Selon l'invention, un tel dispositif est caractérisé en ce qu'il comporte :
- un chariot équipé d'un ressort à force constante monté mobile en translation verticale le long du bâti de l'appareil et fixé solidairement à l'enceinte de chauffage de façon à permettre de déplacer cette enceinte entre d'une part une position basse ou position de repos et d'autre part une position haute ou position de travail dans laquelle la plaque isolante est maintenue en appui contre un ballon de distillation en exerçant une force constante sur ce ballon,
- des organes de manoeuvre dont l'actionnement permet de commander la translation du chariot à ressort et par suite le déplacement de l'enceinte de chauffage entre la position de repos et la position de travail, et
- des organes de verrouillage montés élastiquement sur le bâti de l'appareil et mobiles entre une position embrayée dans laquelle ils permettent de bloquer l'enceinte de chauffage en position de travail et une position débrayée dans laquelle ils permettent le retour de cette enceinte de la position de travail à la position de repos sous l'action de sa gravité.

Selon l'invention, les organes de manoeuvre peuvent avantageusement être constitués par un levier monté élastiquement sur le bâti de l'appareil de distillation, articulé à sa partie médiane et comportant une première extrémité ou extrémité de préhension ainsi qu'une seconde extrémité équipée d'un embout de manoeuvre.

Sous l'action d'une contrainte exercée sur l'extrémité de préhension du levier de manoeuvre, un tel embout de manoeuvre coopère avec une plaquette d'actionnement solidaire du chariot à ressort pour permettre la translation vers le haut de ce chariot et le déplacement de l'enceinte de chauffage de la position de repos à la position de travail.

En effet, lorsqu'un utilisateur applique une force dirigée vers le bas sur l'extrémité de préhension du levier de manoeuvre, l'embout de manoeuvre situé à l'extrémité opposée de ce levier se déplace vers le haut et exerce une poussée sur la plaquette d'actionnement, en prise avec cet embout pour faire monter le chariot à ressort jusque dans la position haute dans laquelle il est bloqué par les organes de verrouillage qui viennent alors en position embrayée.

Selon une autre caractéristique de l'invention, les organes de verrouillage comportent un ergot en forme de coin dont la face supérieure définit en position embrayée une butée permettant de maintenir la plaquette d'actionnement en position haute et de bloquer l'enceinte de chauffage en position de travail.

Plus précisément, au cours du déplacement vers le haut du chariot à ressort, la plaquette d'actionnement vient en regard de la face inclinée de l'ergot en forme de coin et glisse le long de cette face, en exerçant sur celle-ci une contrainte croissante entraînant la rétraction de cet ergot en position débrayée.

Lorsque la plaquette d'actionnement vient au niveau de la face supérieure de l'ergot en forme de coin, la contrainte est relâchée et cet ergot est rappelé élastiquement en position embrayée pour bloquer la plaquette d'actionnement et le chariot à ressort en position haute, et par suite l'enceinte de chauffage en position de travail.

Selon l'invention, les organes de verrouillage coopèrent de préférence avec un électroaimant permettant de déplacer l'ergot en forme de coin de la position embrayée à la position débrayée à la fin d'un essai de distillation de façon à libérer la plaquette d'actionnement et permettre le retour de l'enceinte de chauffage de la position de travail à la position de repos sous l'action de sa gravité.

Il est à noter que lorsque l'enceinte de chauffage est en position de travail, il est également possible à tout instant de la ramener manuellement en position de repos en exerçant sur l'extrémité de préhension du levier de manoeuvre une force dirigée vers le haut de façon à déplacer l'embout de manoeuvre vers le bas.

Selon une caractéristique préférentielle de l'invention, le dispositif comporte un élément de freinage du déplacement de l'enceinte de chauffage entre la position de travail et la position de repos.

Grâce à la présence de cet élément de freinage, la montée de l'enceinte de chauffage de la position de repos à la position de travail s'effectue lentement de même que la vitesse de descente de cette même enceinte de chauffage, vers la position de repos, sous l'effet de la gravité, est fortement limitée.

Selon une autre caractéristique de l'invention, l'enceinte de chauffage est équipée à sa partie inférieure d'un montant de transfert coopérant avec des organes de guidage au cours de son déplacement entre la position de travail et la position de repos.

Une telle configuration est de nature à faciliter dans une large mesure le déplacement de l'enceinte de chauffage.

Les caractéristiques du dispositif qui fait l'objet de l'invention seront décrites plus en détail en se référant aux dessins non limitatifs annexés dans lesquels :
- la figure 1 est un schéma du dispositif représentant l'enceinte de chauffage en position de travail,
- la figure 2 est un schéma similaire à la figure 1 mais représentant l'enceinte de chauffage en position de repos.

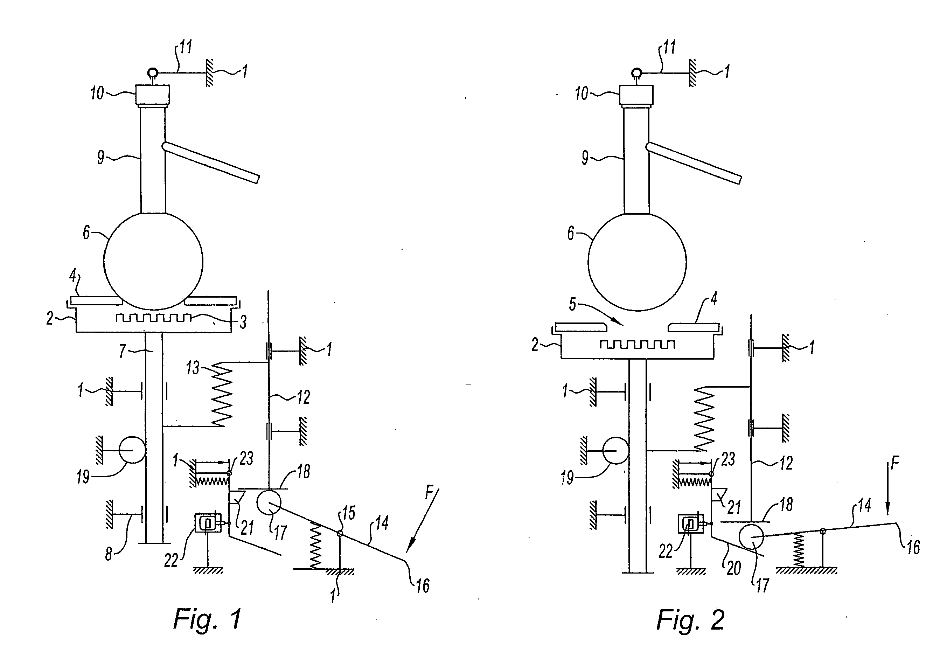

Selon la figure 1, l'appareil de distillation normalisé qui est représenté schématiquement comporte un bâti 1 sur lequel est montée une enceinte de chauffage 2 renfermant un élément calorifique 3.

Cette enceinte de chauffage 2 est fermée à sa partie supérieure par une plaque isolante 4 munie d'une ouverture centrale 5 destinée à permettre la mise en place du fond d'un ballon de distillation 6.

L'enceinte de chauffage 2 est mobile en translation verticale par rapport au bâti 1 de l'appareil de distillation entre une position haute ou position de travail représentée sur la figure 1 dans laquelle la plaque isolante 4 est maintenue en appui contre le ballon de distillation 6 et une position basse ou position de repos représentée sur la figure 2.

Pour faciliter son déplacement entre ces deux positions, l'enceinte de chauffage 2 est équipée à sa partie inférieure d'un montant de transfert 7 qui coopère avec des organes de guidage 8 solidaires du bâti 1 de l'appareil.

La colonne 9 du ballon de distillation 6 est fermée à sa partie supérieure par un bouchon d'obturation étanche 10 qui, dans l'exemple de réalisation représenté sur les figures, est suspendu sur le bâti 1 de l'appareil par des organes d'arrêt 11.

Selon les figures 1 et 2, le montant de transfert 7 de l'enceinte de chauffage 2, est fixé solidairement à un chariot 12 équipé d'un ressort à force constante 13.

Ce chariot à ressort est mobile en translation verticale le long du bâti 1 de l'appareil entre une position haute correspondant à la position de travail de l'enceinte de chauffage 2 représentée sur la figure 1 et une position basse correspondant à la position de repos de cette enceinte représentée sur la figure 2.

Le déplacement du chariot à ressort 12, et par suite de l'enceinte de chauffage 2, entre la position de repos et la position de travail, est commandé par un levier de manoeuvre 14 monté élastiquement sur le bâti 1 de l'appareil de distillation et articulé autour d'un axe 15 à sa partie médiane.

Ce levier de manoeuvre 14 comporte une première extrémité ou extrémité de préhension 16 et une seconde extrémité au niveau de laquelle il est équipé d'un embout de manoeuvre 17 qui vient en prise avec une plaquette d'actionnement 18 solidaire du chariot à ressort 12.

Si, à partir de la position de repos représentée sur la figure 2, un utilisateur exerce une force dirigée vers le bas schématisée par la flèche F sur l'extrémité de préhension 16 du levier de manoeuvre 14, l'embout de manoeuvre 17 se déplace vers le haut en entraînant la plaquette d'actionnement 18.

Par suite, le chariot à ressort 12 et l'enceinte de chauffage 2 se déplacent eux aussi vers le haut jusqu'à la position de travail représentée sur la figure 1.

Un élément de freinage 19 fixé au châssis 1 de l'appareil de distillation vient en prise contre le montant de transfert 7 de l'enceinte de chauffage 2 pour limiter la vitesse de déplacement vers le haut de l'enceinte de chauffage.

Dans la position de travail, la plaque isolante 4 exerce une force constante sur le ballon de distillation 6, ce, quel que soit le type de ballon utilisé, ce grâce à la présence du ressort 13 qui est un ressort à force constante.

Par ailleurs et selon les figures 1 et 2, le chariot à ressort 12 coopère avec des organes de verrouillage 20 articulés autour d'un axe 23 eux aussi montés élastiquement sur le bâti 1 de l'appareil de distillation et susceptibles de se déplacer entre une position embrayée représentée sur les figures vers laquelle ils sont automatiquement rappelés en l'absence de toute contrainte externe s'exerçant sur eux et une position débrayée non représentée sur les figures dans laquelle ils sont rétractés sous contrainte.

Ces organes de verrouillage 20 comportent un ergot en forme de coin 21 dont la face supérieure définit, en position embrayée, une butée permettant de maintenir la plaquette d'actionnement 18 du chariot à ressort 12 en position haute et de maintenir l'enceinte de chauffage 2 dans la position de travail par la force du ressort 13.

Au cours du déplacement vers le haut du chariot à ressort 12, la plaquette d'actionnement 18 vient en regard de la face inclinée de l'ergot en forme de coin 21 et glisse le long de cette face en exerçant sur celle-ci une contrainte croissante.

Sous l'action de cette contrainte, les organes de verrouillage 20 tournent autour de l'axe d'articulation 23 ce qui entraîne la rétraction de l'ergot en forme de coin 21 en position débrayée.

Lorsque la plaquette d'actionnement 18 vient au niveau de la face supérieure de l'ergot en forme de coin 21, la contrainte est relâchée, et, compte tenu du montage élastique des organes de verrouillage 20 sur le bâti 1 de l'appareil de distillation, cet ergot 21 est rappelé élastiquement en position embrayée pour bloquer la plaquette d'actionnement 18 et le chariot à ressort 12 en position haute, et par suite l'enceinte de chauffage 2 dans la position de travail représentée sur la figure 1.

A la fin d'un essai de distillation, un électroaimant 22 solidaire du bâti 1 de l'appareil permet de commander le déplacement des organes de verrouillage 20 et donc de l'ergot en forme de coin 21 de la position embrayée à la position débrayée de façon à libérer la plaquette d'actionnement 18 et permettre le retour de l'enceinte de chauffage 2 de la position de travail à la position de repos représentée sur la figure 2 sous l'action de sa gravité.

La vitesse de ce déplacement de l'enceinte de chauffage 2 est limitée par l'élément de freinage 19.

Il est à noter que lorsque l'enceinte de chauffage 2 est dans la position de travail représentée sur la figure 1, il est également à tout instant possible de la ramener manuellement dans la position de repos représentée sur la figure 2 en exerçant sur l'extrémité de préhension 16 du levier de manoeuvre 14 une contrainte dirigée vers le haut dans une direction opposée à la direction schématisée par la flèche F.

## Revendications

1. Dispositif de positionnement automatique assisté d'une enceinte de chauffage (2) contre un ballon de distillation (6) dans un appareil de distillation automatique sous pression atmosphérique d'échantillons liquides, en particulier d'échantillons de produits pétroliers permettant d'effectuer la mesure des paramètres de distillation de ces échantillons en respectant une norme d'essai prédéfinie, cet appareil de distillation normalisé comportant:
- un bâti fixe (1),
- une enceinte de chauffage (2) renfermant un élément calorifique (3), notamment une résistance chauffante,
- une série de ballons de distillation (6) correspondant respectivement à au moins une norme d'essai et susceptibles d'être fixés au bâti (1) de l'appareil dans une position prédéterminée, la colonne (9) de ces ballons (6) pouvant être fermée par un bouchon d'obturation étanche (10) muni d'un thermomètre permettant de mesurer la température des vapeurs évaporées et comportant une branche latérale destinée à être branchée sur un tube condenseur relié à un cylindre collecteur permettant de recueillir le condensat,
- une série de plaques isolantes (4) destinées à être montées au-dessus de l'élément calorifique (3) pour fermer l'enceinte de chauffage (2) à sa partie supérieure, et équipées, chacune, d'une ouverture centrale (5) ayant une géométrie adaptée à celle du fond de ballons de distillation (6), et
- des moyens de commande et de régulation permettant de commander et de faire varier dans le temps une grandeur de fonctionnement de l'élément calorifique (3), notamment la température ou la puissance de cet élément de manière à obtenir des paramètres de distillation conformément à une norme d'essai prédéfinie,
**caractérisé en ce qu'**
il comporte :
- un chariot (12) équipé d'un ressort à force constante (13) monté mobile en translation verticale le long du bâti (1) de l'appareil et relié par ce ressort (13) à l'enceinte de chauffage (2) de façon à permettre de déplacer cette enceinte entre d'une part une position basse ou position de repos et d'autre part une position haute ou position de travail dans laquelle la plaque isolante (4) est maintenue en appui contre un ballon de distillation (6) préalablement fixé au bâti (1) de l'appareil en exerçant une force constante sur ce ballon (6),
- des organes de manoeuvre (14) dont l'actionnement permet de commander la translation du chariot à ressort (12) et le déplacement de l'enceinte de chauffage (2) entre la position de repos et la position de travail, et
- des organes de verrouillage (20) montés élastiquement sur le bâti (1) de l'appareil et mobiles entre une position embrayée dans laquelle ils permettent de bloquer l'enceinte de chauffage (2) en position de travail et une position débrayée dans laquelle ils permettent le retour de cette enceinte (2) de la position de travail à la position de repos sous l'action de sa gravité.

2. Dispositif selon la revendication 1,
**caractérisé en ce que**
les organes de manoeuvre sont constitués par un levier (14) monté élastiquement sur le bâti (1) de l'appareil, articulé à sa partie médiane et comportant une première extrémité ou extrémité de préhension (16) ainsi qu'une seconde extrémité équipée d'un embout de manoeuvre (17) coopérant avec une plaquette d'actionnement (18) solidaire du chariot à ressort (12) pour permettre la translation de ce chariot et le déplacement de l'enceinte de chauffage (2) de la position de repos à la position de manoeuvre sous l'action d'une contrainte exercée sur l'extrémité de préhension (16) du levier de manoeuvre (14).

3. Dispositif selon la revendication 2,
**caractérisé en ce que**
les organes de verrouillage comportent un ergot en forme de coin (21) dont la face supérieure définit en position embrayée une butée permettant de maintenir la plaquette d'actionnement (18) en position haute et de bloquer le chariot à ressort (12) en position haute, maintenant ainsi l'enceinte de chauffage (2) en position de travail par la force du ressort.

4. Dispositif selon la revendication 3,
**caractérisé en ce que**
les organes de verrouillage (20) coopèrent avec un électroaimant (22) permettant de déplacer l'ergot en forme de coin (21) de la position embrayée à la position débrayée de façon à libérer la plaquette d'actionnement (18) et permettre le retour de l'enceinte de chauffage (2) de la position de travail à la position de repos sous l'action de sa gravité.

5. Dispositif selon l'une quelconque des revendications 1 à 4,
**caractérisé en ce qu'**
il comporte un élément de freinage (19) du déplacement de l'enceinte de chauffage (2) entre la position de travail et la position de repos.

6. Dispositif selon l'une quelconque des revendications 1 à 5,
**caractérisé en ce que**
l'enceinte de chauffage (2) est équipée à sa partie inférieure d'un montant de transfert (7) coopérant avec des organes de guidage (8) au cours de son déplacement entre la position de travail et la position de repos.

## Claims

1. Device for assisted automatic positioning of a heating chamber (2) against a distillation flask (6) in a device for the automatic distillation of liquid samples under atmospheric pressure, in particular samples of petroleum products which allow the distillation parameters of these samples to be measured in compliance with a predefined test standard, this standardised distillation device comprising:
- a fixed frame (1),
- a heating chamber (2) which comprises a heating element (3), in particular a heating resistor,
- a series of distillation flasks (6) which correspond to at least one test standard and which are capable of being fixed to the frame (1) of the device in a predetermined position, the column (9) of these flasks (6) being able to be closed by means of a sealed blocking stopper (10) which is provided with a thermometer which allows the temperature of the evaporated vapours to be measured and which comprises a lateral branch which is intended to be connected to a condenser tube which is connected to a collection cylinder which allows the condensate to be collected,
- a series of insulating plates (4) which are intended to be mounted above the heating element (3) in order to close the heating chamber (2) at the upper portion thereof and which are each provided with a central opening (5) which has a geometry which is adapted to that of the base of the distillation flasks (6), and
- control and regulation means which allow an operating variable of the heating element (3) to be controlled and varied over time, in particular the temperature or the power of this element, in order to obtain distillation parameters in accordance with a predefined test standard,
**characterised in that**
it comprises:
- a carriage (12) which is provided with a spring (13) with constant force which is mounted so as to move vertically in translation along the frame (1) of the device and which is connected by this spring (13) to the heating chamber (2) in order to allow the movement of this chamber on the one hand between a lower position or rest position and on the other hand a higher position or operating position in which the insulating plate (4) is held in abutment against a distillation flask (6) which has been fixed beforehand to the frame (1) of the device by applying a constant force to this flask (6),
- handling members (14) whose activation allows the translation of the spring type carriage (12) and the movement of the heating chamber (2) between the rest position and the operating position to be controlled, and
- locking members (20) which are resiliently mounted on the frame (1) of the device and which can be moved between an engaged position in which they allow the heating chamber (2) to be retained in an operating position and a disengaged position in which they allow this chamber (2) to be returned from the operating position to the rest position under the action of the gravitational force thereof.

2. Device according to claim 1,
**characterised in that**
the handling members are constituted by a lever (14) which is resiliently mounted on the frame (1) of the device, which is articulated to the central portion thereof and which comprises a first end or gripping end (16) and a second end which is provided with a handling end-piece (17) which co-operates with an actuation plate (18) which is fixedly joined to the spring type carriage (12) in order to allow the translation of this carriage and the movement of the heating chamber (2) from the rest position to the handling position under the action of a force which is applied to the gripping end (16) of the handling lever (14).

3. Device according to claim 2,
**characterised in that**
the locking members comprise a pin in the form of a wedge (21) whose upper face defines in the engaged position a stop which allows the actuation plate (18) to be fixed in an upper position and allows the spring-type carriage (12) to be retained in the upper position, thereby fixing the heating chamber (2) in an operating position via the force of the spring.

4. Device according to claim 3,
**characterised in that**
the locking members (20) co-operate with an electromagnet (22) which allows the pin in the form of a wedge (21) to be moved from the engaged position to the disengaged position in order to release the actuation plate (18) and to allow the heating chamber (2) to return from the operating position to the rest position under the action of its gravitational force.

5. Device according to any one of claims 1 to 4,
**characterised in that**
it comprises an element (19) for braking the movement of the heating chamber (2) between the operating position and the rest position.

6. Device according to any one of claims 1 to 5,
**characterised in that**
the heating chamber (2) is provided at the lower portion thereof with a transfer pillar (7) which co-operates with guiding members (8) during its movement between the operating position and the rest position.

## Patentansprüche

1. Automatische Positionierungsvorrichtung mit einer Heizkammer (2) an einem Destillierkolben (6) in einem Gerät zur automatischen Destillation von flüssigen Proben unter atmosphärischem Druck, insbesondere von Proben von Mineralölprodukten, mit dem die Messung der Destillationsparameter dieser Proben unter Beachtung einer vorgegebenen Prüfnorm durchgeführt werden kann, wobei dieses genormte Destillationsgerät Folgendes umfasst:
- einen ortsfesten Ständer (1),
- eine Heizkammer (2), die ein Heizelement (3), insbesondere einen Heizwiderstand, enthält,
- einen Satz Destillierkolben (6), die jeweils wenigstens einer Prüfnorm entsprechen und am Ständer (1) des Gerätes in einer vorbestimmten Position befestigt werden können, wobei die Kolonne (9) dieser Kolben (6) durch einen dicht schließenden Verschlussstopfen (10) verschließbar ist, der mit einem Thermometer versehenen ist, mit dem die Temperatur der entstehenden Dämpfe gemessen werden kann, und die ein seitliches Rohr aufweisen, das dazu bestimmt ist, in ein Kondensationsrohr gesteckt zu werden, das zum Auffangen des Kondensats mit einem Sammelzylinder verbunden ist,
- einen Satz isolierender, zur Anbringung über dem Heizelement (3) vorgesehener, die Heizkammer (2) an ihrer Oberseite verschließender Platten (4), die jeweils mit einer zentralen, eine an die des Bodens der Destillierkolben (6) angepasste Geometrie aufweisende Öffnung (5) versehen sind, und
- Steuerungs- und Regelungsmittel, mit denen eine Betriebsgröße des Heizelements (3) geregelt und in der Zeit verändert werden kann, insbesondere die Temperatur oder die Leistung dieses Elements, um einer vorgegebenen Prüfnorm entsprechende Destillationsparameter zu erhalten, **dadurch gekennzeichnet, dass** sie Folgendes aufweist:
- einen mit einer Feder mit konstanter Kraft (13) ausgestatteten Schlitten (12), der zur vertikalen Verschiebung entlang des Ständers (1) des Geräts beweglich angeordnet und durch diese Feder (13) mit der Heizkammer (2) verbunden ist, damit diese Kammer zwischen einerseits einer unteren Position oder Ruheposition und andererseits einer oberen Position oder Arbeitsposition verschoben werden kann, wobei in letzterer die Isolierplatte (4) an einem zuvor am Ständer (1) des Geräts befestigten Destillierkolben (6) anliegend gehalten ist, indem eine konstante Kraft auf diesen Kolben (6) ausübt wird,
- Betätigungsmittel (14), durch deren Betätigung die Verschiebung des Schlittens mit der Feder (12) und die Verschiebung der Heizkammer (2) zwischen der Ruheposition und der Arbeitsposition vorgenommen werden kann und
- federnd am Ständer (1) des Geräts angeordnete Arretierungsmittel (20), die zwischen einer eingerückten Stellung, in der durch sie die Heizkammer (2) in der Arbeitsposition arretieren werden kann, und einer ausgerückten Stellung, in der sie die Rückkehr dieser Kammer (2) unter der Wirkung ihrer Schwerkraft aus der Arbeitsposition in die Ruheposition ermöglichen.

2. Vorrichtung nach Anspruch 1,
**dadurch gekennzeichnet, dass** die Betätigungsmittel aus einem federnd am Ständer (1) des Geräts angeordneten Hebel (14) bestehen, der in seinem mittleren Teil gelenkig gelagert ist und ein erstes Ende oder Griffende (16) sowie ein zweites, mit einem Betätigungsendstück (17) versehenes Ende aufweist, das mit einer Betätigungsscheibe (18) zusammenarbeitet, die fest mit dem Schlitten mit der Feder (12) verbunden ist, um die Verschiebung dieses Schlittens und die Verschiebung der Heizkammer (2) aus der Ruheposition in die Arbeitsposition mittels eines auf das Griffende (16) des Betätigungshebels (14) ausgeübten Drucks zu ermöglichen.

3. Vorrichtung nach Anspruch 2,
**dadurch gekennzeichnet, dass** die Arretierungsmittel einen keilförmigen Haltestift (21) umfassen, dessen Oberseite in eingerückter Stellung einen Anschlag bildet, durch den die Betätigungsscheibe (18) in der oberen Position gehalten wird und um den Schlitten mit der Feder (12) in der oberen Position zu arretieren, um so die Heizkammer (2) durch die Kraft der Feder in der Arbeitsposition zu halten.

4. Vorrichtung nach Anspruch 3,
**dadurch gekennzeichnet, dass** die Arretierungsmittel (20) mit einem Elektromagneten (22) zusammenarbeiten, wodurch der keilförmige Haltestift (21) aus der eingerückten Stellung in die ausgerückte Stellung verschoben werden kann, um so die Betätigungsscheibe (18) freizugeben und die Rückkehr der Heizkammer (2) aus der Arbeitsposition in die Ruheposition unter Einwirkung ihrer Schwerkraft zu ermöglichen.

5. Vorrichtung nach einem der Ansprüche 1 bis 4,
**dadurch gekennzeichnet, dass** sie ein Bremselement (19) für das Verschieben der Heizkammer (2) zwischen der Arbeitsposition und der Ruheposition aufweist.

6. Vorrichtung nach einem der Ansprüche 1 bis 5,
**dadurch gekennzeichnet, dass** die Heizkammer (2) an ihrer Unterseite mit einer Verstellstütze (7) versehen ist, die während ihrer Verschiebung zwischen der Arbeitsposition und der Ruheposition mit Führungsmitteln (8) zusammenarbeitet.
